# NEUE EUROPÄISCHE PATENTSCHRIFT

(11) **EP 1 075 179 B2**
(45) Veröffentlichungstag und Bekanntmachung des Hinweises auf die Entscheidung über den Einspruch: **12.08.2009**
(45) Hinweis auf die Patenterteilung: 14.08.2002
(21) Anmeldenummer: 99923446.1
(22) Anmeldetag: 22.04.1999
(51) Int. Cl.: A01K 27/00

(54) **HALTE- ODER FÜHRUNGSMATERIAL FÜR HUNDE UND HUNDEGESCHIRR**
RETAINING OR GUIDING MATERIAL FOR DOGS AND DOG HARNESS
MATERIAU DE RETENUE OU DE GUIDAGE POUR CHIENS ET HARNAIS POUR CHIENS

(30) Priorität: 29.04.1998 DE 29807761 U
(43) Veröffentlichungstag der Anmeldung: 14.02.2001
(73) Patentinhaber: Koch, Ernst, 86899 Landsberg (DE)
(72) Erfinder: KOCH, Heinrich, D-86899 Landsberg (DE)
(74) Vertreter: Grünecker, Kinkeldey, Stockmair & Schwanhäusser Anwaltssozietät
(86) Internationale Anmeldenummer: PCT/EP1999/002726
(87) Internationale Veröffentlichungsnummer: WO 1999/055146

(56) Entgegenhaltungen:
- EP-A1- 0 483 726
- DE-A1- 3 705 908
- DE-U- 1 661 038
- DE-U- 8 606 248
- DE-U- 8 914 238
- DE-U1- 7 608 546
- DE-U1- 7 608 547
- GB-A- 2 050 834
- US-A- 2 734 483
- US-A- 2 821 168
- US-A- 5 184 573

## Beschreibung

Die Erfindung betrifft ein Halte- und Führungsmaterial für Hunde sowie ein Hundegeschirr aus einem solchen Halte- und Führungsmaterial.

Aus G 94 12 362.4 ist ein Halsgurt bekannt, welcher mit einem Schnellverschluß und einer den Schnellverschluß überbrückenden Sieherungseinnchtung versehen ist, die im Falle eines unbeabsichtigten Öffnens des Schnellverschlusses ein Abstreifen des Halsgurtes verhindert. Dieser Halsgurt besteht aus einem hochfesten flachen Nylon-Gurt. An diesem Halsgurt kann eine Leine befestigt werden.

Die bekannten Gurte, Leinen, Haisgurte und Geschirre sind üblicherweise aus einem vergieichsweise dicken und hochfesten Band gebildet.

Halsgurte werden nach Möglichkeit locker an das Tier angelegt, um keine unnötig hohen Druckkräfte auf den Hals des Tieres zu übertragen. Bei.einem ocker angelegten Halsgurtbesteht jedoch die Gefahr, daß dieser aufgrund seiner eigenen Trägheit am Hals des Tieres scheuert. Auch hinsichtlich einer sicheren Führung des Tieres, wie sie in vielen Fällen gewünscht wird, erweist sich ein vergleichsweise lockeres Anlegen des Halsgurtes als nachteilig. Bei der Übertragung groBer Kräfte treten insbesondere im Kantenbereich der Gurte hohe Flächenpressungen auf.

Aus der US-A-2 734 483 ist ein Hundehalsband bekannt, das aus einem gewebten Schlauch mit einem verhältnismäßig steifen Puderkörper besteht. Dieses Halsband dient vor allem der Abwehr von Hunderflöhen, ohne den Handhabungskomfort hinreichend zu verbessern.

Aus der GB-A-2 050 834 ist ein Halsband mit einem Insektizid-Zellstoffstreifen bekannt.

Aus der DE-U-89 14 238 ist eine Hundeleine bekannt deren schlauchförmiges Hohlgeflecht einen geflochtenen Kem enthält, der das DurchbeiBen der Leine verhindern soll.

Aus der DE-U-86 06 248 ist allgemein ein Hundegeschirr bekannt.
Aus der DE 37 05 908 A1 ist ein gepolsterter Gurt, insbesondere zur Lastaufnahme am menschlichen Körper bekannt. Der hierfür vorgesehen textile Gewebeschlauch ist mit Kräuselgarn gefüllt.
Aus der DE 166 10 38 U ist ein Schlauchband mit Einlage bekannt, das in erster Linie als Trägerband für Wäschestücke dienen soll und bei dem die endlose Einlage in ein endloses Schlauchgewebe eingewebt wird.
Aus der EP 0 483 726 B1 ist ein einstückig gewebte Schlauchgurt mit weicher Einlage bekannt, insbesondere als Sattel oder Tragegurt bekannt, wobei die Einlage ihrerseits ein Gewebestück bildet, das integral in den Schlauchgurt eingewebt wird.

Der Erfindung liegt die Aufgabe zugrunde, ein Halte- und Führungsmaterial für Hunde zu schaffen, das als Hundeleine und/oder Hundehaisband und/oder Hundegeschirr einerseits einen erhöhten Tragekomfort für das Tier bietet und andererseits einen erhöhten Handhabungskomfort für den Tierhalter gewährleistet.
Der Erfindung liegt ferner die Aufgabe zugrunde, ein entsprechendes Hundegeschirr zu schaffen.

Diese Aufgabe wird erfindungsgemäß durch ein Halte- und Führungsmaterial mit den Merkmalen des Anspruches 1 sowie durch ein Hundegeschirr mit den Merkmalen des Anspruches 10 gelöst.

Vorteilhafte Ausgestaltungen sind in den Unteransprüchen dargelegt.

Durch die erfindungsgemäße Lösung ergibt sich sowohl im unbelasteten Zustand als auch bei der Übertragung vergleichsweise großer Führungskräfte eine für das Tier erheblich verringerte Belastung des Anlage - insbesondere des Halsbereiches. Die schlauchartige Ausbildung des Gurtes hat zur Folge, daß sich die von dem Gurt zu übertragenden Zugkräfte auf einen an dem Tier anliegenden Anlageabschnitt und auf einen nach außen gewandten Außenabschnitt aufteilen. Der an dem Tier anliegende Anlageabschnitt und der nach außen gewandte Außenabschnitt sind aufgrund der schlauchartigen Ausbildung des Gurtbandes gegeneinander lateral verschiebbar. Die Verschiebbarkeit des Anlageabschnittes und des Außenabschnittes gegeneinander erlaubt ein Walken des Halsgurtes und verringert dadurch die bislang im Seitenkantenbereich der Gurte auftretende Lastkonzentration. Durch den Abbau des im Kantenbereich des Gurtes, insbesondere Halsbandes auftretenden Druckes ergibt sich eine erheblich günstigere Druckverteilung zwischen Halsgurt und Tier. Ferner ergibt sich bei hinreichender Festigkeit ein extrem geringes Eigengewicht des Gurtes.

Eine im Hinblick auf eine besonders gleichmäßige Kräfteverteilung vorteilhafte Ausführungsform des Gurtes ist dadurch gegeben, daß der Schlauch vorzugsweise als gewebter Integralschlauch ausgebildet ist. Der in angelegtem Zustand dem Tier zugewandte Anlageabschnitt und der entsprechend abgewandte Außenabschnitt sind damit gemeinsam durch die Schlauchwandung gebildet. Die Schlauchinnenwandung ist vorzugsweise relativ glatt ausgebildet. Dadurch wird das Walken und damit verbunden die Anpassung des Schlauches an den momentanen Belastungszustand verbessert.

Das Halte- und Führungsmaterial besteht vorzugsweise aus gewebtem Kunststoffmaterial, wie einem gewebten Polyamid-Schlauch, ist jedoch hierauf nicht beschränkt. Vielmehr kann das Halte- und Führungsmaterial auch ein gewebter Textilmaterial-Schlauch sein.

Die Gewebestruktur des Gurtbandes ist in vorteilhafter Weise derart gewählt, daß das Gurtband in Längsrichtung des Gurtes eine höhere Zug-Steifigkeit aufweist als in Querrichtung. Dadurch wird es ebenfalls auf vorteilhafte Weise möglich, die Druckbelastung im Kantenbereich des Gurtbandes auf den Hals des Tieres erheblich zu verringern. Der Schlauch ist mit Vorteil aus einem synthetischen Fasermaterial, insbesondere einem Polyamid-Fasermaterial, gebildet. Derartige Fasern ermöglichen eine besonders gewichtsparende Ausführung des Gurtes. Ein entsprechender Halsgurt kann auf einfache Weise ggf. unter Zusatz von Reinigungsmitteln gewaschen werden.

Insbesondere bei der Verwendung synthetischen Fasermateriales wird der Schlauch aus verwebten Fäden gebildet, wobei die jeweiligen Fäden wiederum aus ggf. versponnenen, extrem feinen Mikro-Fasern gebildet sind. Dadurch ergibt sich ein besonders weicher Gurt mit hoher Flexibilität und hoher Zugsteifigkeit.

Eine im Hinblick auf eine hinreichende Formstabilität vorteilhafte Ausführungsform des Gurtes ist dadurch gegeben, daß in einem Übergangsbereich zwischen dem Anlageabschnitt und dem Außenabschnitt eine in Schlauch-Längsrichtung verlaufende Falz-Zone vorgesehen ist. Durch entsprechende Ausbildung dieser Falz-Zone kann auf vorteilhafte Weise erreicht werden, daß der Schlauch selbsttätig eine im wesentlichen flache Ausgangskonfiguration einnimmt. Diese Falz-Zone kann durch Wärmeeinwirkung, beispielsweise durch Bügeln des Schlauches oder auch durch eine bestimmte Web- oder Kettelstruktur definiert werden. Insbesondere bei vergleichsweise breiten Gurten ist es möglich, entsprechende Falz-Zonen zu beiden Längsseiten des Gurtes auszubilden.

Gemäß einer besonders bevorzugten Ausführungsform der Erfindung wird die Falz-Zone durch eine in Längsrichtung des Schlauches verlaufende Web- oder Kettstelle gebildet. Diese Web- oder Kettstelle bildet dabei eine hochfeste Verbindungsstelle, entlang welcher ein vorzugsweise durch ein Web-Verfahren hergestelltes Bandmaterial zu einem Integralschlauch verwebt bzw. gekettelt ist. Die Web- oder Kettstelle ist vorzugsweise derart ausgebildet, daß der Integralschlauch auch im Bereich der Web- oder Kettstelle weitgehend die gleichen mechanischen Eigenschaften aufweist wie in seinen übrigen Wandungsbereichen. Die Web- oder Kettstelle ist jedoch vorzugsweise derart ausgebildet, daß diese ein flaches Zusammenlegen des Schlauches unterstützt.

Um sicherzustellen, daß die Web- oder Kettstelle im Seitenbereich des Gurtbandes verläuft, ist die Web- oder Kettstelle vorzugsweise farblich gekennzeichnet. Dies erfolgt vorzugsweise durch Verwendung eines in einer Kontrastfarbe zum übrigen Gurtband eingefärbten Web- oder Kettfadens.

Alternativ zu einer derartigen farblichen Kennzeichnung des Seitenbereiches des Gurtbands, oder auch in Kombination damit, ist es in vorteilhafter Weise auch möglich, wenigstens eine Seite des Gurtbandes farblich zu kennzeichnen. Hierzu sind ebenfalls in vorteilhafter Weise in Kontrastfarbe eingefärbte Fäden in den entsprechenden Wandungsbereich des Integralschlauches eingewebt oder eingeflochten.

Ein im Hinblick auf eine besonders gleichmäßige Flächenpressung der über den Gurt aufgebrachten Haltekräfte vorteilhafte Ausführungsform des Gurtes ist dadurch gegeben, daß in dem Schlauch, zumindest abschnittsweise, eine Futter- oder Polstereinrichtung aufgenommen ist. Diese Futter- oder Polstereinrichtung ist in vorteilhafter Weise durch einen Polsterkörper gebildet, der einen flachen, insbesondere im wesentlichen flach rechteckförmigen Querschnitt aufweist.

Der Polsterkörper ist vorzugsweise aus einem an sich formbeständigen Weichstoffkörper gebildet und zwanglos im Inneren des Integralschlauches aufgenommen. Eine im Hinblick auf eine besonders geringe Flächenpressung vorteilhafte Ausführungsform des Gurtes, insbesondere des Halsgurtes ist dadurch gegeben, daß der Polsterkörper hinsichtlich seines Querschnitts derart ausgebildet ist, daß die Umfangslänge des Querschnitts in einer zur Gurt-Längsrichtung senkrechten Schnittebene kleiner ist als ein Innen-Umfang eines entsprechenden Querschnittes des Schlauches. Ein derart bemessener Polsterkörper kann im wesentlichen zwangslos in den Schlauch eingeführt werden. Die Walk-Eigenschaften des Gurtes, insbesondere die Verschiebbarkeit der am Tier anliegenden Wandung gegenüber der abgewandten und auch nach außen weisenden Wandung werden durch einen derart lose eingesetzten Polsterkörper noch verbessert.

Eine im Hinblick auf eine günstige Flächenpressung des Gurtes bzw. Halsgurtes vorteilhafte Ausführungsform ist dadurch gegeben, daß die Breite des Polsterkörpers kleiner ist als der halbe Innen-Umfang des Schlauches. Hinsichtlich seiner Dicke ist der Polsterkörper in vorteilhafter Weise derart dimensioniert, daß diese wenigstens 30 % der senkrecht zur Anlagefläche gemessenen Dicke des Gurtbandes entspricht.

Die Breite des in den Schlauch eingefügten Polsterkörpers beträgt vorzugsweise wenigstens 50 % der Breite des Gurtbandes.

Der Polsterkörper ist vorzugsweise aus einem vorzugsweise mehrlagigen Schaumstoffkörper gebildet. Als Schaumstoffmaterial wird gemäß einem besonderen Aspekt der vorliegenden Erfindung ein geschlossenporiges Schaumstoffmaterial verwendet. Dadurch wird die mögliche Wasseraufnahme des Gurtes vermindert und eine Verkürzung der Trockenzeit erreicht. In besonders vorteilhafter Weise wird es dadurch auch möglich, einen an sich schwimmfähigen und u.U. auch als Schwimmhilfe wirksamen Gurt, insbesondere Halsgurt zu schaffen.

Bei dem zur Bildung des Polsterkörpers verwendeten Schaumstoffmaterial handelt es sich vorzugsweise um ein aus einem thermoplastischen bzw. wärmeschmelzbaren Kunststoffmaterial gebildetes Schaumstoffmaterial. Dadurch wird es auf vorteilhafte Weise möglich, das zunächst ggf. über die gesamte Länge des Integralschlauches in diesen eingebrachte Polstermaterial lokal anzuschmelzen und den zunächst gepolsterten Schlauch abschnittsweise flachzudrücken. In dem flachgedrückten Bereich können die entsprechenden Seitenabschnitte des Integralschlauches durch das aufgeschmolzene Material des Polsterkörpers miteinander verschweißt werden. Ein derartiger Bereich des Schlauches läßt sich auf einfache Weise in entsprechende Ösenabschnitte, die beispielsweise an einem Schnellverschlußhaken ausgebildet sind, einführen.

Weitere Einzelheiten und Merkmale der Erfindung ergeben sich aus der nachfolgenden Beschreibung mehrerer bevorzugter Ausführungsformen in Verbindung mit der Zeichnung. Es zeigen:
- Fig. 1: eine perspektivische Ansicht eines aus einem Integralschlauch gebildeten Gurtabschnittes eines Gurtes zum Halten und Führen von Tieren mit darin aufgenommenem Polsterkörper einschließlich Querschnittsansicht;
- Fig. 2: eine perspektivische Ansicht eines Geschirrs für Hunde mit einer Halsgurteinrichtung, bestehend aus einem gewebten und abschnittsweise mit einem lose eingesetzten Weichstoff-Pad versehenen Integralschlauch;
- Fig. 3: eine perspektivische Ansicht einer aus dem erfindungsgemäßen Gurtmaterial gefertigten Leine.

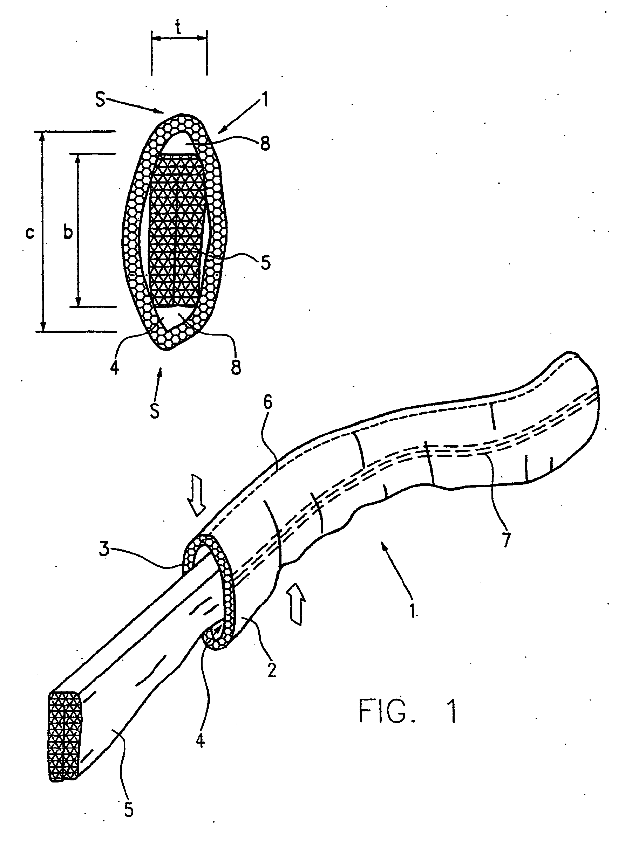

Der in Fig.1 vereinfacht dargestellte Gurtabschnitt umfaßt einen aus einer Vielzahl von Polyamidfäden gewebten Integralschlauch 1. Der Integralschlauch 1 bildet einen zur großflächigen Anlage, beispielsweise am Halsbereich eines Tieres oder am Arm eines Tierhalters vorgesehenen Anlageabschnitt 2, sowie einen dem genannten Abschnitt abgewandten Außenabschnitt 3.

Im Inneren des Integralschlauchs 1 ist ein Schlauchinnenraum 4 gebildet, in welchem ein Polsterkörper 5 aufgenommen ist. Der Integralschlauch 1 ist aus einem gewebten Fasermaterial gebildet. Bei der hier dargestellten Ausführungsform besteht das Fasermaterial aus Polyamidfäden, wobei jeder einzelne Polyamidfaden wiederum aus einer Vielzahl Polyamid-Mikrofasern gebildet ist.

Der Integralschlauch umfaßt eine sich in Längsrichtung des Integralschlauchs 1 erstreckende Kettstelle 6. Die Kettstelle 6 ist derart gebildet, daß diese ein flaches Zusammenlegen der den Anlageabschnitt 2 und den Außenabschnitt 3 bildenden Wandung des Integralschlauches 1 unterstützt. Auch auf der der Kettstelle 6 gegenüberliegenden Längsseitenkante des Integralschlauches 1 kann die Webstruktur derart modifiziert sein, daß dadurch tendentiell ein markanter Seitenkantenbereich des Integralschlauches 1 definiert ist.

Der Integralschlauch 1 ist vorzugsweise in einer Webstruktur gewebt, die der Schlauchwandung eine vergleichsweise große Dicke (beispielsweise 3-fache Fadendicke) verleiht. Die Webstruktur ist bei dem hier dargestellten Gurtabschnitt ferner derart gewählt, daß sich eine hohe Steifigkeit in Längsrichtung des Integralschlauches und eine vergleichsweise geringe Steifigkeit in Umfangsrichtung des Integralschlauches 1 sowie eine hohe Flexibilität ergibt. Die Webtechnik ist ferner derart gewählt, daß die den Schlauchinnenraum 4 begrenzende Innenseite des Integralschlauches vergleichsweise glatt ausgebildet ist. Dadurch wird es möglich, daß der Anlageabschnitt 2 und der Außenabschnitt 3, wie durch die Pfeildarstellungen gezeigt, gegeneinander walkbar sind.

Die Kettstelle 6 ist bei der hier dargestellten Ausführungsform durch einen in Kontrastfarbe eingefärbten Kettfaden gekennzeichnet. Der Anlageabschnitt 2 ist ebenfalls durch eine eingewebte, in Kontrastfarbe eingefärbte Bandstruktur gekennzeichnet. Wie aus der Detailansicht deutlich hervorgeht, ist der im Inneren des Integralschlauches 1 angeordnete Polsterkörper 5 im wesentlichen zwanglos im Schlauchinnenraum 4 aufgenommen.

Der Polsterkörper 5 ist hier durch einen flachen Weichstoffstreifen gebildet, der hier aus einem geschlossen-zellig geschäumten thermoplastischen Polymer gebildet ist. Die Breite b des Polsterkörpers 5 ist kleiner als ein Maß c, das in etwa der halben Innenumfangslänge des Integralschlauches 1 entspricht. Dadurch wird im Bereich der Seitenkanten s des Integralschlauches 1 jeweils ein im Querschnitt dreieckförmiger Hohlraum 8 ("Zwickel") gebildet. Durch diesen Hohlraum 8 wird eine besonders günstige Entlastung des Seitenkantenbereiches des Integralschlauches 1 erreicht. Der Anlageabschnitt 2 und der Außenabschnitt 3 liegen im wesentlichen zwanglos an den entsprechenden Seitenflächen des Polsterkörpers 5 an. Die Dicke des Polsterkörpers 5 ist hier 2,5 Mal so groß wie die Wanddicke des Integralschlauches 1. Die Breite b des Polsterkörpers beträgt wenigstens das Zwei- bis Sechsfache der Dicke t des Polsterkörpers 5 (hier das Dreifache).

Der vorangehend beschriebene Gurt kann in Form eines einfachen, ggf. verstellbaren Halsbandes oder als Leine Anwendung finden.

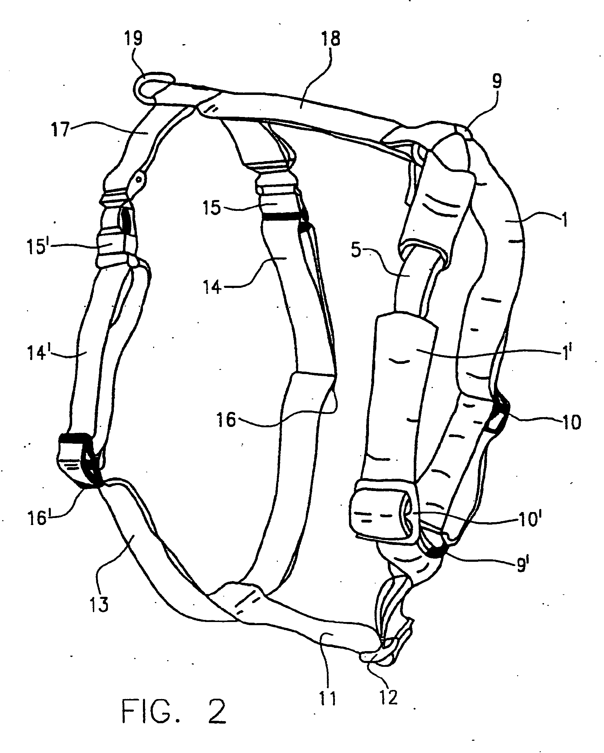

Es ist auch möglich, aus dem beschriebenen Gurtmaterial ein Geschirr zu bilden, wie dies in Fig.2 dargestellt ist. Bei dem in Fig.2 dargestellten Geschirr umfaßt eine Halsgurteinrichtung zwei Integralschlauchsegmente 1, 1', in deren Innenraum, wie aus dem aufgebrochen dargestellten Abschnitt ersichtlich, der Polsterkörper 5 zwanglos aufgenommen ist. Der Integralschlauch ist in seinem oberen Endbereich durch einen Haltering 9 hindurchgeführt und zu einer Schlaufe vernäht. Der Polsterkörper 5 ist dabei durch die entsprechende Naht im Inneren des Integralschlauchs 1 bzw. 1' in Schlauch-Längsrichtung fixiert. Der Integralschlauch 1 ist ebenfalls unter Bildung einer Schlaufe durch einen weiteren im unteren Bereich des Geschirrs vorgesehenen Haltering 9' hindurchgeführt. Die wirksame Halsweite des durch die Integralschlauchabschnitte 1,1' gebildeten Halsgurts ist über eine Verstelleinrichtung 10, 10' einstellbar. Neben den an den Integralschlauchabschnitten 1, 1' gebildeten unteren, den Haltering 9' umgreifenden Schlaufen ist durch den Haltering 9' ein hier aus einem flachen Bandmaterial gebildeter Gurtabschnitt (Längsgurt) 11 befestigt. Die Länge des Gurtabschnitts 11 ist über eine weitere Verstelleinrichtung 12 einstellbar. Der Gurtabschnitt 11 ist in einem den Haltering 9' abgewandten Endabschnitt an einem Haltegürtel 13 befestigt.

An dem Haltegürtel 13 sind zwei Schlaufenabschnitte 14, 14' gebildet, welche jeweils eine entsprechende Öse eines Schnellverschlußhakens 15, 15' durchgreifen. Zur Einstellung der Länge des Haltegürtels 13 sind Verstelleinrichtungen 16, 16' vorgesehen, die in ihrem Aufbau den Verstelleinrichtungen 10, 10' und 12 ähnlich sind. Die den jeweiligen Schnellverschlußhaken 15, 15' zugeordneten Rastglieder sind wiederum an einem Haltegürtelabschnitt 17 angebracht, der über einen Längssteg (Längsgurt) 18 mit dem Haltering 9 und damit mit den oberen Endabschnitten des Integralschlauches 1, 1' verbunden ist. An dem dem Haltegürtelabschnitt 17 benachbarten Ende des Längssteges 18 ist ein Zugring 19 befestigt, an welchem beispielsweise über einen Karabinerhaken eine Leine lösbar anbringbar ist.

In einer weiteren Ausführungsform kann die Halsgurteinrichtung eine erste Verstelleinrichtung zur Längenverstellung der Haltgurteinrichtung aufweisen, die nach noch einer weiteren, vorteilhaften Ausgestaltung (hier nicht gezeigt) auch eine Schnellverschlußeinrichtung aufweisen kann, um hierdurch das rasche Anlegen des Halsgurtes zu erleichtern. Bei einer solchen Gurteinrichtung hatt diese Schnellverschlußeinrichtung in "Parallelschaltung" durch eine Sicherungseinrichtung überbrückt sein, um einen Sicherheitseffekt hinsichtlich des Haltens oder Führens des Tieres zu erreichen, wie dies z.B. in der WO 96/03864 dargestellt ist. Üblicherweise ist im Bereich der Halsgurteinrichtung ein Zugring zur lösbaren Befestigung (Karabinerhaken) einer Führleine vorgesehen. Dieser Zugring ist dann vorzugsweise nicht in einem Bereich vorgesehen, der die Verschlußeinrichtung trägt, so daß die Zugkräfte des Tieres nicht auf einem Schnellverschluß ruhen.

Vorzugsweise ist der obere oder der untere Längsgurt durch eine Verschlußeinrichtung und/oder eine zweite Verstelleinrichtung entweder verschließbar und/oder in seiner Länge einstellbar. Um das Anlegen des Geschirrs zu erleichtern, ist der Haltegürtel, der im Rücken- bzw. Bauchbereich des Tieres geschlossen wird, mit einer Schnellverschlußeinrichtung ausgestattet, vorzugsweise können auch zwei derartige Verschlußeinrichtungen beiderseits des Angriffspunktes des oberen bzw. unteren Längsgurtes 18, 11 an dem Haltegürtel 13 vorgesehen sein.

Bei der hier dargestellten Ausführungsform des Geschirrs sind lediglich die den Halsgurt bildenden Geschirrabschnitte durch den Integralschlauch gebildet. Es ist in vorteilhafter Weise auch möglich, weitere Teile des Geschirrs aus dem beschriebenen Integralschlauch mit ggf. darin aufgenommenem Polsterkörper 5 zu bilden. Insbesondere der Haltegürtel 13 und der Längssteg 18 können mit Vorteil ebenfalls durch den Integralschlauch gebildet sein. Es ist auch möglich, sämtliche Gurtelemente des beschriebenen Geschirrs durch den beschriebenen Integralschlauch zu bilden.

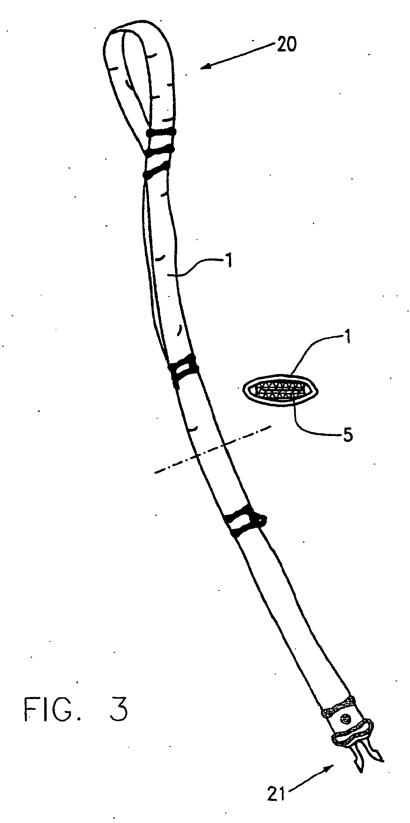

Die in Fig. 3 gezeigte Leine ist ebenfalls aus einem Gurtmaterial gefertigt, das aus einem flexiblen Rohrgewebe- bzw. Schlauch besteht. Sowohl im oberen Griffbereich 20 als auch in dem zur Befestigungsvorrichtung abfolgenden Bereich der Leine ist im Inneren des Schlauches 1 der Polsterkörper 5 zwanglos aufgenommen. Die derart ausgebildete Leine kann aufgrund ihrer hohen Flexibilität mehrfach um das Handgelenk geschlungen werden und hinterläßt selbst bei Aufbringung hoher Zugkräfte keine Striemen. Der zwischen Befestigungsvorrichtung 21 und Griffbereich 20 liegende Bereich der Leine kann einhändig besonders zuverlässig ergriffen werden. Die vereinfachte Schnittansicht verdeutlicht den Querschnitt der Leine in dem durch Strichpunktlinien gekennzeichneten Abschnitt.

Selbstverständlich kann die Schlauchform auch durch Verbinden von zwei Materialstreifen (Textil- oder Kunststoffmaterial) gebildet werden. Der Integralschlauch, vorzugsweise aus Kunststoffeinlage, wird zur Bildung von Gurten, wie z.B. einem Halsgurt oder Hundehalsband, einer Hundeleine oder einem Hundegeschirr, deutlich bevorzugt. Gegebenenfalls kann auch nur ein Teil des Geschirrs, Halsbandes oder Leine schlauchförmig und vorzugsweise mit einem eingesetzten Polstermaterial versehen sein.

## Patentansprüche

1. Halte- und Führungsmaterial für Hunde, bestehend zumindest teilweise aus einem gewebten Schlauch (1) aus synthetischem Fasermaterial, in dem zumindest abschnittweise ein flacher, formbeständiger Polsterkörper (5) aus einem geschlossenporigen Kunststoffmaterial aufgenommen ist, dessen Breite wenigstens 50% einer Breite des gewebten Schlauches beträgt und geringer ist als eine halbe Innenumfangslänge des gewebten Schlauches und der Polsterkörper (5) zwanglos im Schlauchinnenraum aufnehmbar ist, derart, dass ein Anlageabschnitt (2) und ein Außenabschnitt (3) zwanglos an entsprechenden Seitenflächen des Polsterkörpers (5) anliegen, und der Anlageabschnitt (2) und der Außenabschnitt (3) gegeneinander lateral verschiebbar sind.

2. Halte- und Führungsmaterial nach Anspruch 1, **dadurch gekennzeichnet, dass** der Schlauch (1) ein Integralschlauch ist.

3. Halte- und Führungsmaterial nach Anspruch 1 oder 2, **dadurch gekennzeichnet, dass** der Schlauch (1) aus einem Polyamid-Fasermaterial gebildet ist.

4. Halte- und Führungsmaterial nach zumindest einem der Ansprüche 1 bis 3, **dadurch gekennzeichnet, dass** der Schlauch (1) aus verwebten Fäden gebildet ist, wobei die Fäden aus Mikrofasern gebildet sind.

5. Halte- und Führungsmaterial nach zumindest einem der Ansprüche 1 bis 4, **dadurch gekennzeichnet, dass** der Schlauch (1) in einem Übergangsbereich zwischen einem Anlageabschnitt (2) und einem Außenabschnitt (3) eine in Schlauch-Längsrichtung verlaufende Falz-Zone aufweist.

6. Halte- und Führungsmaterial nach Anspruch 5, **dadurch gekennzeichnet, dass** die Falz-Zone durch eine in Längsrichtung des Schlauches (1) verlaufende Web- oder Kettstelle (6) gebildet ist.

7. Halte- und Führungsmaterial nach Anspruch 6, **dadurch gekennzeichnet, dass** die Web- oder Kettstelle (6) farblich hervorgehoben ist.

8. Halte- und Führungsmaterial nach zumindest einem der Ansprüche 1 bis 7, **dadurch gekennzeichnet, dass** eine Markierungseinrichtung (7) vorgesehen ist, zur Markierung des Anlage- und/oder des Außenabschnittes (2, 3).

9. Halte- und Führungsmaterial nach Anspruch 8, **dadurch gekennzeichnet, dass** die Markierung (7) in die Schlauchwandung eingewebt oder eingeflochten ist.

10. Halte- und Führungsmaterial nach zumindest einem der Ansprüche 1 bis 9, **dadurch gekennzeichnet, dass** der Polsterkörper (5) einen im wesentlichen flach rechteckförmigen Querschnitt aufweist.

11. Halte- und Führungsmaterial nach zumindest einem der Ansprüche 1 bis 10, **dadurch gekennzeichnet, dass** ein Umfang des Querschnitts des Polsterkörpers (5) kleiner ist als ein Innen-Umfang des Querschnitts des Schlauches (1).

12. Halte- und Führungsmaterial nach zumindest einem der Ansprüche 1 bis 11, **dadurch gekennzeichnet, dass** der Polsterkörper (5) eine Polster-Dicke (t) aufweist, die wenigstens 30 % der Gesamt-Dicke des Gurtbandes beträgt.

13. Halte- und Führungsmaterial zumindest einem der Ansprüche 1 bis 12, **dadurch gekennzeichnet, dass** das geschlossenporige Kunststoffmaterial aus Schaumstoffmaterial oder Extrusionsmaterial besteht.

14. Halte- und Führungsmaterial nach zumindest einem der Ansprüche 11 bis 13, **dadurch gekennzeichnet, dass** der Polsterkörper (5) in dem Schlauch in Schlauch-Längsrichtung positioniert ist.

15. Halte- und Führungsmaterial nach zumindest einem der Ansprüche 1 bis 14, **dadurch gekennzeichnet, dass** das Volumen des Polsterköpers (5) einen derart hinreichend großen Auftrieb erzeugt, dass das Halte- und Führungsmaterial, insbesondere Halsgurte, Leine oder Geschirr, schwimmfähig ist.

16. Halte- und Führungsmaterial nach zumindest einem der Ansprüche 1 bis 15, **dadurch gekennzeichnet, dass** in dem Polsterkörper (5) eine flexible Querversteifungslage aufgenommen ist.

17. Halte- und Führungsmaterial nach zumindest einem der Ansprüche 1 bis 16, **dadurch gekennzeichnet, dass** es zumindest teilweise ein Hundegeschirr und/oder eine Hundeleine und/oder ein Hundehalsband bildet.

18. Hundegeschirr, bestehend aus einem Halte- oder Führungsmaterial für Hunde nach zumindest einem der vorhergehenden Ansprüche 1 bis 17, **gekennzeichnet durch** eine Halsgurteinrichtung, verbunden mit einem unteren Längsgurt (11) und einem oberen Längsgurt (18), die ihrerseits mit einem, **durch** zumindest eine Verschlusseinrichtung (15, 15') zu einem geschlossenen Ringkörper verbindbaren Haltegürtel (13) verbunden sind.

19. Hundegeschirr nach Anspruch 18, **dadurch gekennzeichnet, dass** die Halsgurteinrichtung durch eine erste Verstelleinrichtung (10, 10') längenverstellbar ist.

20. Hundegeschirr nach Anspruch 18 oder 19, **dadurch gekennzeichnet, dass** die Halsgurteinrichtung eine Schnellverschlusseinrichtung aufweist, die durch ein, eine Sicherungseinrichtung enthaltendes Gurtstück in Parallelanordnung überbrückt ist.

21. Hundegeschirr nach zumindest einem der vorhergehenden Ansprüche 18 bis 20, **dadurch gekennzeichnet, dass** der obere oder untere Längsgurt (18, 11) durch eine Verschlusseinrichtung und/oder eine zweite Verstelleinrichtung (12) schließbar und/oder längenverstellbar ist.

22. Hundegeschirr nach zumindest einem der vorhergehenden Ansprüche 18 bis 21, **dadurch gekennzeichnet, dass** der Haltegürtel (13) zumindest eine Schnellverschlusseinrichtung (15, 15') aufweiset.

23. Hundegeschirr nach Anspruch 22, **dadurch gekennzeichnet, dass** die Schnellerschlussvorrichtungen (15, 15') beiderseits eines Angriffspunktes des oberen Längsgurtes (11) an dem Haltegürtel innerhalb desselben vorgesehen sind.

## Claims

1. A holding and guiding material for dogs, consisting at least partly of a woven hose (1) made of synthetic fiber material, in which at least section-wise a flat, dimensionally stable padding member (5) of a closed-cell plastic material is accommodated, whose width is at least 50 % of a width of the woven hose and which is smaller than half of an inner circumferential length of the woven hose, and the padding member (5) can be freely accommodated in the interior of the hose in a manner that an abutment section (2) and an outer section (3) freely rest against respective side faces of the padding member (5) and the abutment section (2) and the outer section (3) can be laterally displaced against each other.

2. A holding and guiding material according to claim 1, **characterized in that** the hose (1) is an integral hose.

3. A holding and guiding material according to claim 1 or 2, **characterized in that** the hose (1) is made of a polyamide fiber material.

4. A holding and guiding material according to at least one of claims 1 to 3, **characterized in that** the hose (1) consists of threads that are woven together, said threads consisting of microfibers.

5. A holding and guiding material according to at least one of claims 1 to 4, **characterized in that** in a transition area between an abutment section (2) and an outer section (3) the hose (1) is provided with a longitudinally extending fold zone.

6. A holding and guiding material according to claim 5, **characterized in that** the fold zone is formed by a weaving or looping location extending in the longitudinal direction of the hose (1).

7. A holding and guiding material according to claim 6, **characterized in that** the weaving or looping location (6) is highlighted by a different color.

8. A holding and guiding material according to at least one of claims 1 to 7, **characterized in that** a marking (7) is provided for marking the abutment and/or outer section (2,3).

9. A holding and guiding material according to claim 8, **characterized in that** the marking (7) is woven or twisted into the wall of the hose.

10. A holding and guiding material according to at least one of claims 1 to 9, **characterized in that** the padding member (5) has a substantially flat rectangular cross-section.

11. A holding and guiding material according to at least one of claims 1 to 10, **characterized in that** a circumference of the cross-section of the padding member (5) is smaller than an inner circumference of the cross-section of the hose (1).

12. A holding and guiding material according to at least one of claims 1 to 11, **characterized in that** the padding member (5) has a padding thickness (t) amounting to at least 30 % of the total thickness of the strap.

13. A holding and guiding material according to at least one of claims 1 to 12, **characterized in that** the closed-cell plastic material is composed of foam material or extrusion material.

14. A holding and guiding material according to at least one of claims 11 to 13, **characterized in that** the padding member (5) is positioned in the hose in the longitudinal direction of the hose.

15. A holding and guiding material according to at least one of claims 1 to 14, **characterized in that** the volume of the padding member (5) produces a buoyancy which is sufficiently high to render the holding and guiding material, particularly the neck straps, the lead or the harness, floatable.

16. A holding and guiding material according to at least one of claims 1 to 15, **characterized in that** a flexible transverse stiffening layer is accommodated in the padding member (5).

17. A holding and guiding material according to at least one of claims 1 to 16, **characterized in that** it at least partially forms a dog harness and/or a dog lead and/or a dog collar.

18. A dog harness consisting of a holding or guiding material for dogs according to at least one of the preceding claims 1 to 17, **characterized by** a neck strap unit connected to a lower longitudinal strap (11) and an upper longitudinal strap (18) which are, in turn, connected to a retaining belt (13) that is connectable by at least one closure mechanism (15, 15') so as to form a closed annular member.

19. A dog harness according to claim 18, **characterized in that** the neck strap unit is adapted to be longitudinally adjusted by a first adjustment means (10, 10').

20. A dog harness according to claim 18 or 19, **characterized in that** the neck strap unit has a quick-closure mechanism which is bridged in a parallel arrangement by a strap piece including a safety means.

21. A dog harness according to at least one of preceding claims 18 to 20, **characterized in that** the upper or the lower longitudinal strap (18, 11) are adapted to be closed and/or to be longitudinally adjusted by a closure mechanism and/or a second adjustment means (12).

22. A dog harness according to at least one of the preceding claims 18 to 21, **characterized in that** the retaining belt (13) is provided with at least one quick-closure mechanism (15, 5').

23. A dog harness according to claim 22, **characterized in that** the quick-closure mechanisms (15, 15') are provided on both sides of a point where the upper longitudinal strap (18) is applied to the retaining belt within said retaining belt.

## Revendications

1. Matériel pour attacher et mener un chien, formé au moins en partie d'un tube tissé (1) en matière fibreuse synthétique dans lequel est logé au moins par sections un corps de rembourrage (5) plat et indéformable en matière plastique à alvéoles fermées dont la largeur représente au moins 50 % d'une largeur du tube tissé et est inférieure à la moitié du périmètre intérieur du tube tissé, et le corps de rembourrage (5) est apte à être logé sans forcer à l'intérieur du tube de telle sorte qu'une section d'application (2) et une section extérieure (3) soient appliquées sans forcer contre des surfaces latérales correspondantes du corps de rembourrage (5) et que la section d'application (2) et la section extérieure (3) puissent coulisser latéralement l'une par rapport à l'autre.

2. Matériel selon la revendication 1, **caractérisé en ce que** le tube (1) est un tube intégral.

3. Matériel selon la revendication 1 ou 2, **caractérisé en ce que** le tube (1) se compose d'un matériau fibreux polyamide.

4. Matériel selon l'une au moins des revendications 1 à 3, **caractérisé en ce que** le tube (1) est formé de fils entrelacés, les fils se composant de microfibres.

5. Matériel selon l'une au moins des revendications 1 à 4, **caractérisé en ce que** le tube (1) comporte, dans une zone de transition entre une section d'application (2) et une section extérieure (3), une zone de pli qui s'étend dans le sens longitudinal du tube.

6. Matériel selon la revendication 5, **caractérisé en ce que** la zone de pH est formée par une zone de tissage ou de chaîne (6) qui s'étend dans le sens longitudinal du tube (1).

7. Matériel selon la revendication 6, **caractérisé en ce que** la zone de tissage ou de chaîne (6) est soulignée en couleur.

8. Matériel selon l'une au moins des revendications 1 à 7, **caractérisé en ce qu'**il est prévu un dispositif de marquage (7) pour indiquer la section d'application et/ou la section extérieure (2, 3).

9. Matériel selon la revendication 8, **caractérisé en ce que** le marquage (7) est intégré dans la paroi du tube grâce au tissage ou à l'entrelacement.

10. Matériel selon l'une au moins des revendications 1 à 9, **caractérisé en ce que** le corps de rembourrage (5) présente une section transversale globalement rectangulaire plate.

11. Matériel selon l'une au moins des revendications 1 à 10, **caractérisé en ce qu'**un périmètre de la section transversale du corps de rembourrage (5) est inférieur à un périmètre intérieur de la section transversale du tube (1).

12. Matériel selon l'une au moins des revendications 1 à 11, **caractérisé en ce que** le corps de rembourrage (5) présente une épaisseur de rembourrage (t) qui représente au moins 30 % de l'épaisseur totale de la courroie.

13. Matériel selon l'une des revendications 1 à 12, **caractérisé en ce que** la matière plastique à alvéoles fermées se compose d'une mousse ou d'une matière extrudée.

14. Matériel selon l'une au moins des revendications 11 à 13, **caractérisé en ce que** le corps de rembourrage (5) est placé dans le tube dans le sens longitudinal de celui-ci.

15. Matériel selon l'une au moins des revendications 1 à 14, **caractérisé en ce que** le volume du corps de rembourrage (5) produit une force portante suffisamment grande pour que ledit matériel, en particulier un collier, une laisse ou un harnais, flotte.

16. Matériel selon l'une au moins des revendications 1 à 15, **caractérisé en ce qu'**une couche flexible de renforcement transversal est logée dans le corps de rembourrage (5).

17. Matériel selon l'une au moins des revendications 1 à 16, **caractérisé en ce qu'**il forme au moins en partie un harnais pour chien et/ou une laisse pour chien et/ou un collier pour chien.

18. Harnais pour chien comprenant un matériel pour attacher ou mener un chien selon l'une au moins des revendications précédentes 1 à 17, **caractérisé par** un dispositif formant collier qui est relié à une courroie longitudinale inférieure (11) et à une courroie longitudinale supérieure (18) qui sont elles-mêmes reliées à une sangle d'attache (13) apte à être reliée grâce à au moins un dispositif de fermeture (15, 15') à un corps annulaire fermé.

19. Harnais pour chien selon la revendication 18, **caractérisé en ce que** le dispositif formant collier est réglable en longueur grâce à un premier dispositif de réglage (10, 10').

20. Harnais pour chien selon la revendication 18 ou 19, **caractérisé en ce que** le dispositif formant collier comporte une fermeture rapide qui est couverte parallèlement par une pièce de courroie contenant un dispositif de sécurité.

21. Harnais pour chien selon l'une au moins des revendications précédentes 18 à 20, **caractérisé en ce que** la courroie longitudinale supérieure ou inférieure (18, 11) est apte à être fermée et/ou est réglable en longueur grâce à un dispositif de fermeture et/ou à un second dispositif de réglage (12).

22. Harnais pour chien selon l'une au moins des revendications précédentes 18 à 20, **caractérisé en ce que** la sangle d'attache (13) comporte au moins une fermeture rapide (15, 15').

23. Harnais pour chien selon la revendication 22, **caractérisé en ce que** les fermetures rapides (15, 15') sont prévues des deux côtés d'un point d'application de la courroie longitudinale supérieure (11) sur la sangle d'attache, à l'intérieur de celle-ci.
